Europäisches Patentamt

European Patent Office

Office européen des brevets

(11) Veröffentlichungsnummer: **0 252 165 B1**

## (12) EUROPÄISCHE PATENTSCHRIFT

(45) Veröffentlichungstag der Patentschrift: **11.12.91**

(21) Anmeldenummer: **86109081.9**

(22) Anmeldetag: **03.07.86**

(51) Int. Cl.⁵: **H02M 3/28, H02M 3/337**

(54) Schaltnetzteil.

(43) Veröffentlichungstag der Anmeldung:
**13.01.88 Patentblatt 88/02**

(45) Bekanntmachung des Hinweises auf die
Patenterteilung:
**11.12.91 Patentblatt 91/50**

(84) Benannte Vertragsstaaten:
**AT BE CH DE FR GB IT LI LU NL SE**

(56) Entgegenhaltungen:
**EP-A- 0 071 284**
**DE-A- 3 025 115**
**US-A- 4 158 881**
**US-A- 4 338 658**
**US-A- 4 447 867**

(73) Patentinhaber: **SIEMENS AKTIENGESELL-
SCHAFT**
**Wittelsbacherplatz 2**
**W-8000 München 2(DE)**

(72) Erfinder: **Munz, Dieter, Dipl.-Ing. (FH)**
**Tilmann-Riemenschneider-Strasse 19**
**W-8552 Höchstadt(DE)**

## Beschreibung

Die vorliegende Anmeldung betrifft ein Schaltnetzteil zur potentialgetrennten Stromversorgung der Steuerkreise eines netzspannungsgespeisten Transistorpulsumrichtes. Eine derartige Einrichtung ist aus der Zeitschrift "Siemens-Energietechnik", 6. Jahrgang, Heft 4, 1984, Seiten 182 bis 186, bekannt. Schaltnetzteile zur Bereitstellung einer Stromversorgungsspannung sind an sich gemäß den "Valvo Berichten", Band XVIII (Jahrgang 1974), Heft 1/2, Seiten 143 bis 154, bekannt, so daß man zur Bereitstellung mehrerer potentialgetrennter Ausgangsspannungen daran denken könnte, den induktiven Übertrager solcher Schaltnetzteile mit einer entsprechenden Anzahl von Sekundärwicklungen zu versehen. Dies bedingt aber relativ große Kernabmessungen und demzufolge neben einem großen ohmschen Wicklungswiderstand auch unzulässig große Koppelkapazitäten zwischen der Primär- und den Sekundärwicklungen, wodurch mit unkontrollierbaren Störungen zu rechnen ist, welche ein ordnungsgemäßes Arbeiten der Ansteuerelektronik für den Umrichter in Frage stellen.

Nach der DE-OS 30 25 115 ist ein fremdgeführter Wechselrichter mit einer Brückenschaltung bekannt, welcher aus zwei Kondensatorzweigen und aus zwei Zweigen mit im Gegentakt fremdgesteuerten elektronischen Schaltern besteht. Zur Bereitstellung verschiedener Ausgangsspannungen mit unterschiedlicher Spannungshöhe ist im Diagonalzweig der Brücke die Primärwicklung eines Transformators angeordnet, welcher eine entsprechende Anzahl von Sekundärwicklungen aufweist. Mit dieser Anordnung ergeben sich die oben geschilderten Nachteile.

Auch der nach der US-PS 41 58 881 bekannte Gleichspannungswandler mit geregelter Ausgangsspannung enthält je eine aus zwei Kondensatoren und aus zwei elektronischen Schaltern bestehende Brückenhälften. Als Ansteuerschaltung der beiden im Gegentakt zu betreibenden elektronischen Schalter ist dort eine bistabile Kippstufe vorgesehen, welche vom Taktgebersignal angesteuert wird, wobei dieser bistabilen Kippstufe zwei NAND-Gatter nachgeordnet sind, welche an ihren zweiten Eingängen vom inversen Taktgebersignal beaufschlagt sind. Mit dieser bekannten Schaltung läßt sich jedoch eine korrekte Ansteuerung der in der Halbbrücke angeordneten elektronischen Schalter nicht durchführen, da sich die Ansteuersignale für die beiden elektronischen Schalter zeitlich überlappen würden.

Die Erfindung stellt sich die Aufgabe, eine aufwandsarme Einrichtung der eingangs genannten Art mit geringen Koppelkapazitäten zwischen den Übertragerwicklungen zu schaffen und mit einfachen Mitteln für eine korrekte Ansteuerung der elektronischen Schaltglieder im Halbbrückenzweig zu sorgen.

Diese Aufgabe wird erfindungsgemäß durch die im Hauptanspruch angegebenen Merkmale gelöst.

Die Erfindung samt ihren weiteren Ausgestaltungen soll nachstehend anhand der Figuren näher erläutert werden. Es zeigen

Figur 1    ein Ausführungsbeispiel des erfindungsgemäßen Schaltnetzteiles und

Figur 2    Zeitdiagramme zum Taktbetrieb des Schaltnetzteiles.

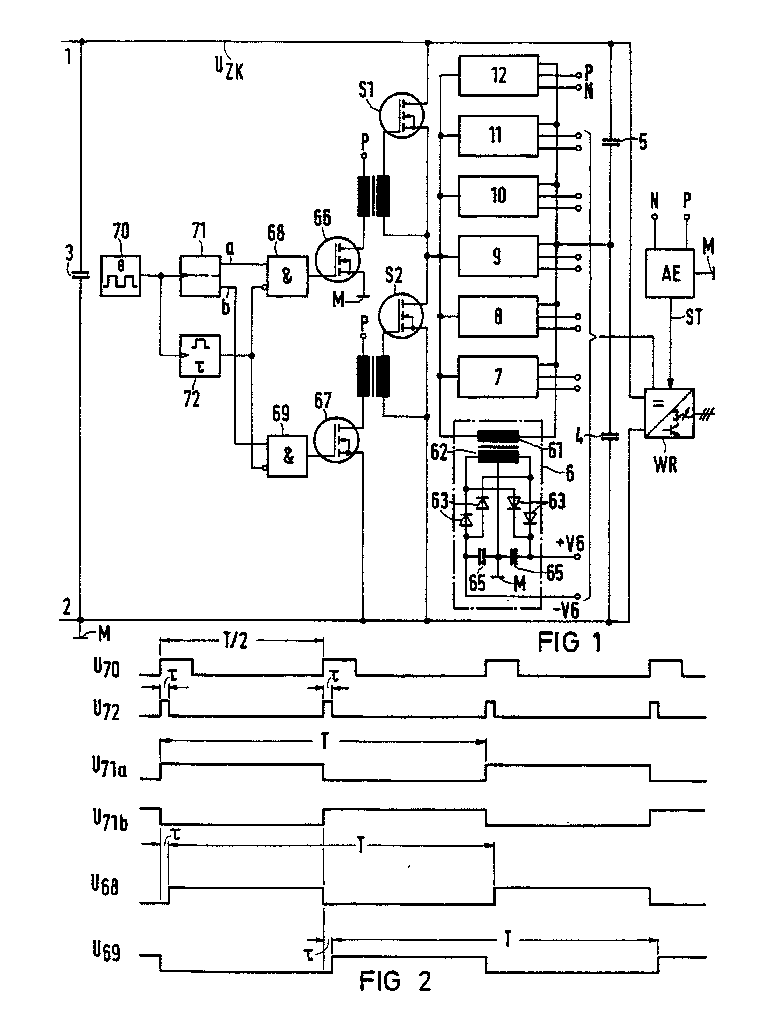

In Figur 1 ist mit WR ein Transistorwechselrichter bezeichnet, welcher über die Leitungen 1 und 2 eines Gleichstromzwischenkreises mit einen Glättungskondensator 3 und einem nicht dargestellten Gleichrichter verbunden ist. Auf der Leitung 1 herrscht das im wesentlichen konstante positive Gleichspannungspotential $U_{ZK}$ gegenüber der auf dem Bezugspotential M liegende Leitung 2. Das ebenfalls von den Leitungen 1 und 2 gespeiste erfindungsgemäße Schaltnetzteil besteht aus einer Brückenschaltung mit zwei elektronischen Schaltern S1 und S2 sowie zwei Kondensatoren 4 und 5 in gegenüberliegenden Brückenzweigen. Im Diagonalzweig dieser Brückenschaltung sind sieben in ihrem Aufbau gleiche Wandler 6 bis 12 vorgesehen, wobei die Ausgangsspannungen P und N des Gleichspannungswandlers 12 einer Steuersignale ST für den Wechselrichter WR liefernde Ansteuerelektronik AE zugeführt sind, während die Ausgangsspannungen der übrigen Wechselrichter dazu dienen, die Stromversorgung für die Steuerkreise der Leistungstransistoren des Wechselrichters WR bereitzustellen.

Am Beispiel des bezüglich seines inneren Aufbaus näher dargestellten Wandlers 6 geht hervor, daß die erfindungsgemäße Stromversorgungseinrichtung separate induktive Übertrager enthält, deren Primärwicklungen (z.B. 61) jeweils nur eine einzige Sekundärwicklung 62 zugeordnet ist und die einzelnen Primärwicklungen parallel zueinander geschaltet sind. Die Kernabmessungen der Übertrager sind dabei nur für den jeweils von ihnen zu übertragenden Teil der Gesamtleistung des Schaltnetzteiles ausgelegt, wodurch sich jeweils optimal kleine Koppelkapazitäten zwischen Primär- und Sekundärwicklung ergeben. Damit verbunden ist auch der Vorteil, daß sich ein entsprechend geringer ohmscher Widerstand der Wicklung ergibt. An die Sekundärwicklung der Wandler sind Mittelpunktsschaltungen (z.B. 63) für bezüglich des Bezugspotentials M symmetrische Gleichspannungen +V6 bzw. -V6 angeschlossen, welche mittels Kondensatoren 65 geglättet werden. Bei Mittelpunktschaltungen muß der gleichgerichtete Strom jeweils nur eine einzige Diode durchlaufen, was wiederum zu einem kleinen Innenwiderstand der Versorgungsspannungsquelle beiträgt.

Mittels der im Gegentakt betriebenen elektronischen Schalter S1 und S2 wird in den Primärwicklungen der induktiven Übertrager der Wandler 6 bis 12 ein Rechteckwellenstrom mit periodischer wechselnder Amplitudenrichtung erzwungen. Die Ansteuerung der als Leistungs Feldeffektransistoren ausgebildeten Schalter S1 und S2 erfolgt über zwei Treiber-Transistoren 66 bzw. 67, welche von den Ausgangssignalen zweier UND-Glieder 68 und 69 abwechselnd im Takt der von einem Generator 70 gelieferten Impulse durchlässig gesteuert werden. Das Ausgangssignal des Taktgenerators 70 ist dem dynamischen Eingang einer bistabilen Kippstufe 71 zugeführt, welche ihren Zustand bei jeder ansteigenden Impulsflanke des Ausgangssignales des Taktgenerators 70 wechselt und so eines der UND-Gatter 68 und 69 zur Abgabe eines die Durchschaltung des Schalters 66 bzw. 67 bewirkenden Signals vorbereitet, was dann nach Ablauf der Verzögerungszeit $\tau$ einer ebenfalls mit den ansteigenden Impulsflanke des Generatorsignals angestoßenen monostabilen Kippstufe 72 stattfindet.

Die Fig. 2 zeigt die zu dem geschilderten Taktbetrieb zugehörigen Impulszeitdiagramme. Mit $U_{68}$ bis $U_{72}$ sind die Ausgangssignale der jeweils mit gleichen Bezugsziffern versehenen Schaltelemente aus Fig. 1 bezeichnet. Man erkennt, daß die bistabile Kippstufe 71 als Frequenzteiler wirksam ist, indem sie die Fequenz 2/T der von dem Taktgenerator 70 gelieferten Impulse halbiert und an ihrem mit a und b bezeichneten Ausgänge Rechteckimpulsspannungen mit dem Tastverhältnis 0,5 und der Periodendauer T liefert. Die diesen Signalen $U_{71a}$ bzw. $U_{71b}$ zugeordnete Betätigung der Schalter 66 und 67 durch die Ausgangssignale $U_{68}$ bzw. $U_{69}$ wird jedoch jeweils um die Verzögerungszeit $\tau$ der monostabilen Kippstufe 72 verzögert, wodurch im Hinblick auf die Ansprechtoleranzen der Schalter 66 und 67 sichergestellt werden kann, daß niemals beide Schalter gleichzeitig betätigt werden und so einen Kurzschluß zwischen den Leitungen 1 und 2 bewirken können. Die Verzögerungszeit $\tau$ der monostabilen Kippstufe 72 wird zweckmäßigerweise möglichst klein gewählt, wodurch die Größe der Kapazität der Glättungskondensatoren 65 klein gehalten werden kann. Ein Wert von $\tau$, mit dem sich bei einer Schaltfrequenz von 1/T = 50 kHz ein Tastverhältnis der Impulsspannungen $U_{68}$ bzw. $U_{69}$ zwischen 0,49 und 0,47 ergibt, hat sich als ausreichend erwiesen.

Insgesamt ergibt sich mit der Erfindung eine überaus störsichere Stromversorgungseinrichtung, welche darüberhinaus auch noch den Vorteil eines äußerst geringen Innenwiderstandes aufweist, mit dem es möglich wird potentialmäßig getrennte Ausgangsspannungen bereitzustellen, welche ohne besondere Regeleinrichtungen im gesamten möglichen Betriebsbereich, welcher den Leerlauf-, den Vollast und den Laststoßfall umfaßt, eine Toleranz von weniger als 10 % einhalten.

## Patentansprüche

1. Einrichtung zur potentialgetrennten Gleichstromversorgung der Steuerkreise eines netzspannungsgespeisten Transistorpulsumrichters, wobei für die einzelnen Stromversorgungsspannungen separate induktive Übertrager vorgesehen sind, deren parallel geschaltete Primärwicklungen (61) den Diagonalzweig einer Brükkenschaltung bilden, welche aus zwei Kondensatorzweigen und aus zwei Brükkenzweigen mit im Gegentakt fremdgesteuerten elektronischen Schaltern (S1, S2) besteht und wobei zur Ansteuerung der beiden elektronischen Schalter zwei UND-Glieder (68, 69) vorgesehen sind, deren Eingänge von dem einen bzw. dem anderen Ausgang einer bistabilen Kippstufe (71) und gemeinsam vom Ausgang einer monostabilen Kippstufe (72) beaufschlagt sind und die Eingänge der bistabilen Kippstufe und der monostabilen Kippstufe an den Ausgang eines Taktgenerators (70) angeschlossen sind.

2. Einrichtung nach Anspruch 1, **dadurch gekennzeichnet,** daß jeweils von den Sekundärwicklungen der Übertrager (62) bezüglich eines Bezugspotentials (M) symmetrische Gleichspannungen erzeugende Mittelpunktschaltungen (63) gespeist sind.

## Claims

1. Device for voltage-isolated direct current supply of the control circuits of a mains voltage-fed transistor pulse converter, with separate inductive transformers being provided for the individual current supply voltages, the parallel-connected primary windings (61) of which transformers form the diagonal branch of a bridge circuit which consists of two capacitor branches and of two bridge branches with electronic switches (S1, S2) externally controlled in push-pull, and with two AND gates (68, 69) being provided for the activation of the two electronic switches, upon the inputs of which AND gates there act the one or the other respective output of a bistable flip-flop (71) and, on both, the output of a monostable flip-flop (72), and the inputs of the bistable flip-flop and the monostable flip-flop are connected to the output of a clock generator (70).

2. Device according to claim 1, characterised in that centre tap connections (63) which generate direct voltages which are symmetrical relative to a reference potential (M) are fed, in each case, by the secondary windings of the transformers (62).

**Revendications**

1. Dispositif pour réaliser l'alimentation en courant continu, à séparation de potentiel, des circuits d'un convertisseur d'impulsions à transistors, alimenté par la tension du secteur, et dans lequel pour les différentes tensions d'alimentation en courant, il est prévu des transformateurs inductifs séparés, dont les enroulements primaires (61), branchés en parallèle, forment la branche diagonale d'un circuit en pont qui est constitué de deux branches contenant des condensateurs et de deux branches contenant des interrupteurs électroniques (S1,S2) commandés de l'extérieur, en opposition de phase, et dans lequel pour la commande des deux interrupteurs électroniques, il est prévu deux circuits ET (68,69), dont les entrées sont chargées par l'une ou l'autre des sorties d'un étage à bascule bistable (71) et en commun par la sortie d'un étage à bascule monostable (70), tandis que les entrées de l'étage à bascule bistable et de l'étage à bascule monostable sont raccordées à la sortie d'un générateur de cadence (70).

2. Dispositif suivant la revendication 1, caractérisé par le fait que des circuits (63) à prise médiane produisant des tensions continues symétriques par rapport à un potentiel de référence (M), sont alimentés respectivement par les enroulements secondaires des transformateurs (62).

FIG 1

FIG 2